# EUROPEAN PATENT APPLICATION

(11) **EP 1 818 084 A1**
(43) Date of publication of application: **15.08.2007**
(21) Application number: 07002643.0
(22) Date of filing: 07.02.2007
(51) Int. Cl.: A63B 71/06, A63B 24/00

(54) **User identification for fitness trainers**

(30) Priority: 13.02.2006 US 352701
(71) Applicant: Precor Incorporated, Woodinville, WA 98072-4002 (US)
(72) Inventor: Birrell, James S., Seattle, WA 98177 (US); Dyer, David E., Renton, WA 98058 (US); Pipinich, Victor, Seattle, WA 98115 (US)
(74) Representative: Spitz, Volker

(57) **Abstract**

In accordance with the principles of the present invention, an user identification system for a fitness trainer is provided. An operating system architecture for the fitness trainer includes a hardware circuit board, a processor in communication with the hardware circuit board, and memory in communication with the hardware circuit board and the processor. A biometric capture mechanism in communication with the processor and the memory.

## Description

### FIELD OF THE INVENTION

The present invention relates to fitness equipment operating systems.

### BACKGROUND OF THE INVENTION

From their humble beginnings as free weights and bicycles mounted on wooden platforms, exercise equipment such as stationary bicycles, treadmills, elliptical fitness trainers, rowing machines, stair climbers, weight resistance machines, and the like have grown increasingly sophisticated. Not only has the mechanical aspects of these machines improved, with innovations such as adjustable platforms, variable resistance, and a wide range of exercising positions, but the microprocessing capabilities of these exercise devices has improved markedly. Thus, today's exercise equipment offers users a wide variety of different exercise patterns; not only patterns design to burn a specified number of calories or cover a specified distance, but also complex workout patterns such as interval workouts, course patterns, etc.

As the sophistication of the exercise equipment has increased, so also the sophistication of exercise science has improved. Today's sophisticated health club user typically cross-trains by using a plurality of exercise equipment rather than focusing on a single type of modality. In addition, today's sophisticated health club user will alter the volume or intensity of their exercise routines in a pattern referred to as periodization. Often today's exercise users are following an exercise program scientifically designed for maximum benefit over a period of time. The user's workout information is tracked over time by the user or a fitness facility where the user exercises, with adjustments made to the program based on feedback from the results of exercise routines. As a result, the user, the fitness trainer, and/or the health club are faced with the daunting task of gathering and organizing data across a wide range of products over long periods of time.

Some current exercise devices that attempt to track a user's workout data require a user to input a user identification code into the exercise device microprocessor, a time consuming act that is subject to user error and requires the health clubs to issue and track the identification codes. Other exercise devices that attempt to track a user's workout data require the user to carry a card, which can be easily lost or stolen and an inconvenience to the user who typically is dressed in light exercise clothing. Thus, it would be desirable to provide improved user identification in exercise equipment.

### SUMMARY OF THE INVENTION

The present invention provides an operating system architecture for a fitness trainer. The operating system includes a display, a processor in communication with the display, a hardware circuit board in communication with the processor, memory in communication with the hardware circuit board and the processor, and a biometric capture mechanism in communication with the processor and the memory. The memory is capable of storing template biometric data with which biometric data captured by the biometric capture mechanism is compared.

According to a principal aspect of the invention, a fitness device includes a frame, first and second foot links, first and second foot supporting portions for receiving the feet of the user, a coupling, a guide, a display, a processor, memory and a biometric capture mechanism. The frame has a pivot axis defined thereon, and is configured to be supported on a floor. The first and second foot links each include a first portion and a second portion. The first and second foot support portions supported by the first and second foot links, respectively. The coupling is associated with the first portion of each foot link for coupling the first portion of each foot link to the pivot axis so that the first portion of each foot link travels in a closed path relative to the pivot axis. The guide is associated with the frame and operative to engage and direct the second portions of the foot links along preselected reciprocating paths of travel as the first portions of the respective foot links travel along their paths of travel, so that when the exercise device is in use the foot support portion moves along a generally elliptical path of travel. The display is in communication with the foot link, the processor is in communication with the display, the memory is in communication with the processor, and the biometric capture mechanism is in communication with the processor and the memory.

According to another principal aspect of the present invention, a system of identifying a user for a fitness trainer includes the steps of capturing a user biometric, extracting data from the biometric and storing the data as a template, and capturing a sample of the chosen biometric. The system further includes the steps of the user of the fitness equipment presenting a live biometric, and utilizing a matching algorithm to compare the live biometric with the stored templates, whereby, if a match is made, the user is granted access to operate the fitness trainer.

In another aspect in accordance with the principles of the present invention, the biometric capture mechanism is a hand biometric system. In another aspect in accordance with the principles of the present invention, the biometric capture mechanism is a face biometric system

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

Figure 1 illustrates an elevated front perspective view of a fitness device in accordance with the principles of the present invention.

Figure 2 illustrates an elevated, side view of the fitness device of Figure 1.

Figure 3 shows a view screen and electronic housing incorporating a fingerprint biometric identification system in accordance with the principles of the present invention.

Figure 4 shows a schematic of an example architecture of a biometric identification system in accordance with the principles of the present invention.

Figure 5 an electric circuit diagram of an example capacitive fingerprint scanner in accordance with the principles of the present invention.

Figure 6 shows a view screen and electronic housing incorporating a hand geometry biometric identification system in accordance with the principles of the present invention.

Figure 7 is a schematic showing the hand measurements of a hand geometry biometric identification system of the present invention.

Figure 8 shows a view screen and electronic housing incorporating a face identification biometric system in accordance with the principles of the present invention is seen.

Figure 9 is a flow-chart of an example local boot loader program in accordance with the principles of the present invention.

### DETAILED DESCRIPTION OF THE INVENTION

While an exemplary embodiment of the invention has been illustrated and described, it will be appreciated that various changes can be made therein without departing from the spirit and scope of the invention.

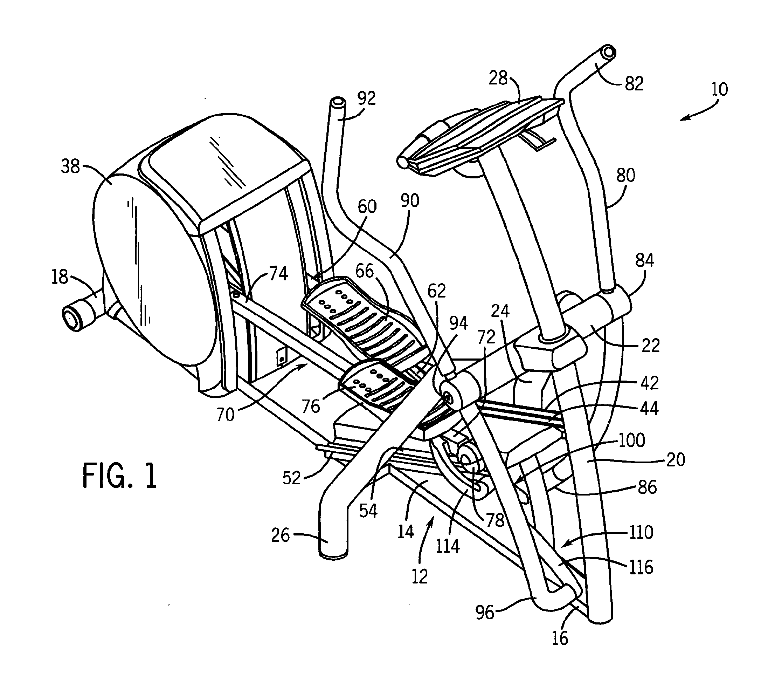

Figures 1-2 illustrate an example embodiment of a fitness device in the form of a total body elliptical fitness cross-training device 10 suitable for use with the present invention. While the example embodiment described herein is a Precor^{®} Elliptical Fitness Cross-trainer (available from Precor Incorporated, Woodinville, Washington 98072 USA), the principles of the present invention apply to any other fitness devices, including but not limited to treadmills, stair climbers, stationary bikes, rowing machines, stair climbers, weight resistance machines and the like.

Briefly described, the fitness device 10 includes a frame 12 that has a forward upright member 20, a forward end portion 16 and a rearward end portion 18. Preferably, the forward end portion 16 of the frame 12 can simply terminate at the end of a substantially horizontal, longitudinal central member 14, while the rearward end portion 18 can terminate at a relatively shorter transverse member. Ideally, but not essentially, the frame 12 can be composed of tubular members that can be relatively light in weight but that provide substantial strength and rigidity. The frame 12 also may be composed of solid members that provide the requisite strength and rigidity while maintaining a relatively lightweight.

The forward upright member 20 extends upwardly from the longitudinal central member 14 of the frame 12. Preferably, the upright member 20 can be slightly rearward curved; however, the forward member 20 may be configured at other upward angles. A relatively short, transversely oriented crossbar member 22 can be connected to the forward upright member 20. Left and right balance arms 24, 26 can depend downwardly from each end of the crossbar member 22 to engage the floor on each side of the longitudinal central member 14 near the forward end of the fitness device 10, thereby increasing stability. Ideally, but not essentially, these members can be composed of a material similar to that described above, and can be formed in quasi-circular tubular configurations.

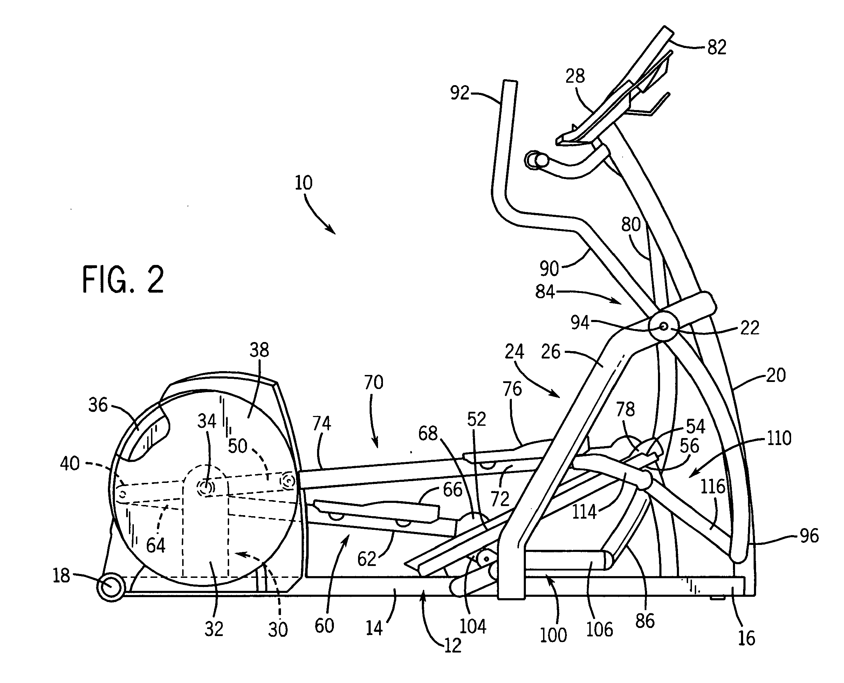

Left and right axle mounts 30, 32 (seen in Figure 2) extend upwardly towards the rear region of the frame 12. The axle mounts 30, 32 support a transverse axle 34 that can be preferably operatively connected to a flywheel 36 contained within a center housing 38. The regions of the axle mounts 30, 32 which house the ends of the transverse axle 34, can contain low friction engaging systems, such as bearing systems (not shown), to allow the transverse axle 34 to rotate with little resistance within the housing in the axle mounts 30, 32. The transverse axle 34 also may be operatively connected to a capstan-type drive (not shown) in some embodiments, to allow the axle 34 to rotate in one direction.

The left and right ends of the transverse axle 34 rotatably engage left and right crank arm assemblies 40, 50. Left and right foot links 60, 70 each include a forward end 62, 72, a rearward end 64, 74, and a foot support portion 66, 76 therebetween. The foot support portions 66, 76 are positioned near the forward portion of the foot links 60, 70, and provide stable foot placement locations. The foot links 60, 70 are aligned in approximately parallel relationship with the longitudinal central member 14 of the frame 12. The rearward ends 64, 74 of the foot links 60, 70 engage the crank arm assemblies 40, 50 such that the foot support portion 66, 76 of the foot links travel in a generally arcuate or elliptical reciprocal path as the transverse axle 34 rotates. In some exemplary embodiments, the foot support portions 66, 76 can be configured to form toe straps and/or toe and heel cups (not shown) which aid in forward motion recovery at the end of a rearward or forward striding motion of a foot.

The forward ends 62, 72 of the foot links 60, 70 preferably are supported by rollers 68, 78, which engage guide tracks 42, 52 (best seen in Figure 1) that are mounted to the frame 12. Preferably, the engagement rollers 68, 78 can be actually pairs of rollers. The engagement rollers 68, 78 rotate about axles that are affixed to the forward portions 62, 72 of the foot links 60, 70. In one embodiment, the guide tracks can be statically mounted to the frame 12. The guide tracks 42, 52 can be completely separate members or can be part of one single connected unit. The guide tracks 42, 52 attach to the longitudinal central member 14 of the frame 12 at an angled inclination. In one embodiment, the angle of inclination can be approximately thirty degrees (30°). In an alternative embodiment, the guide tracks can incorporate a mechanism such as a motor (not shown) and a lead screw (not shown) for selectively adjusting the inclination of the guide tracks.

Preferably, the upper surface of the guide tracks 42, 52 can be shaped to contain two longitudinally extending, adjacent engagement grooves 44, 54 (seen in Figure 1). These engagement grooves 44, 54 give the upper surface of the guide tracks 42, 52 a generally "W-shaped" cross-sectional configuration. The engagement grooves 44, 54 are specifically sized and shaped to correspondingly mate with the rollers 68, 78 of the foot links 60, 70 in order to assist in the lateral containment of the rollers 68, 78 on the guide tracks. During use of the fitness device 10, the engagement rollers 68, 78 at the front of the foot links 60, 70 translate back and forth the length of the guide tracks 42, 52 in rolling engagement within the grooves 44, 54, as the foot support portions 66, 76 of the foot links 60, 70 travel in an arcuate path of motion, and the rearward portions 64, 74 of the foot links 60, 70 rotate about the transverse axle 34.

The forward ends 62, 72 of the foot links 60, 70 can be operatively connected to engagement assemblies 100, 110, which in turn can be operatively connected to the coupling regions 86, 96 of left and right swing arm mechanisms 80, 90, respectively. Each swing arm mechanism 80, 90 contains a hand-gripping portion 82, 92, a pivot point 84, 94, and a coupling region 86, 96. The pivot points 84, 94 rotatably secure the swing arm mechanisms 80, 90 to each end of the crossbar member 22 of the frame 12. The coupling regions 86, 96 of the swing arm mechanisms 80, 90 rotatably connect to the engagement assemblies 100, 110, and turn to the foot support portions 66, 76 of the foot links 60, 70. Each engagement assembly 100, 110 includes an abutment arm 106, 116 and a curved attachment link 104, 114, which together prevent the derailment of the foot link rollers 68, 78 from the guide tracks 42, 52.

The hand-gripping portions 82, 92 of the swing arm mechanisms 80, 90 are grasped by the hands of the user, and allow upper body arm and shoulder exercising motions to be incorporated in conjunction with the reciprocal, elliptical exercising motion traced out by the feet of the user. The linking of the swing arm mechanisms 80, 90 to the foot links 60, 70, via the engagement assemblies 100, 110, and the rotational securement of the swing arm mechanisms 80, 90 to the forward upright member 20 of the frame 12 at the pivot points 84, 94, results in generally rearward, arcuate motion of a hand-gripping portion being correspondingly linked to a generally forward, arcuate motion of a respective foot support portion, and vice versa.

To use this fitness device 10, the user stands on the foot support portions 66, 76 and grasps the hand-gripping portions 82, 92. The user imparts a rearward stepping motion on one of the foot support portions and a forward stepping motion on the other foot support portion, thereby causing the transverse axle 34 to rotate in a clockwise direction (when viewed from the right side as shown in Figures 1 and 2), due to the crank arm assemblies 40, 50 coupling the motion of the foot links 60, 70 to the rotation of the transverse axle 34. In conjunction with the lower body action, the user also imparts a substantially forward pushing motion on one of the hand-gripping portions and a substantially rearward pulling motion on the other hand-gripping portion. Due to the rotatable connection of the coupling regions 86, 96 of the swing arm mechanisms 80, 90 to the forward portions 62, 72 of the foot links 60, 70 (via the engagement assemblies), and the rotational securement of the swing arm mechanisms 80, 90 to the forward upright member 20 of the frame 12 at their pivot points 84, 94, each hand-gripping portion moves forward as its respective foot support portion moves rearward, and vice versa.

The foot links 60, 70 are attached to the transverse axle 34 by the crank arm assemblies 40, 50 such that one foot support portion moves substantially forward as the other foot support portion moves substantially rearward. In this same fashion, one hand-gripping portion moves forward as the other hand-gripping portion moves rearward (e.g., when the left hand-gripping portion 82 moves forward, the left foot support portion 66 moves rearward, while the right foot support portion 76 moves forward and the right hand-gripping portion 92 moves rearward). Therefore, the user can begin movement of the entire foot link and swing arm mechanism linkage by moving any foot support portion or hand-gripping portion, or preferably by moving all of them together.

Again, while the example embodiment depicts a total body elliptical fitness cross-training device, the principles of the present invention apply to any other fitness devices, including but not limited to treadmills, stair climbers, stationary bikes, rowing machines, stair climbers, weight resistance machines and the like.

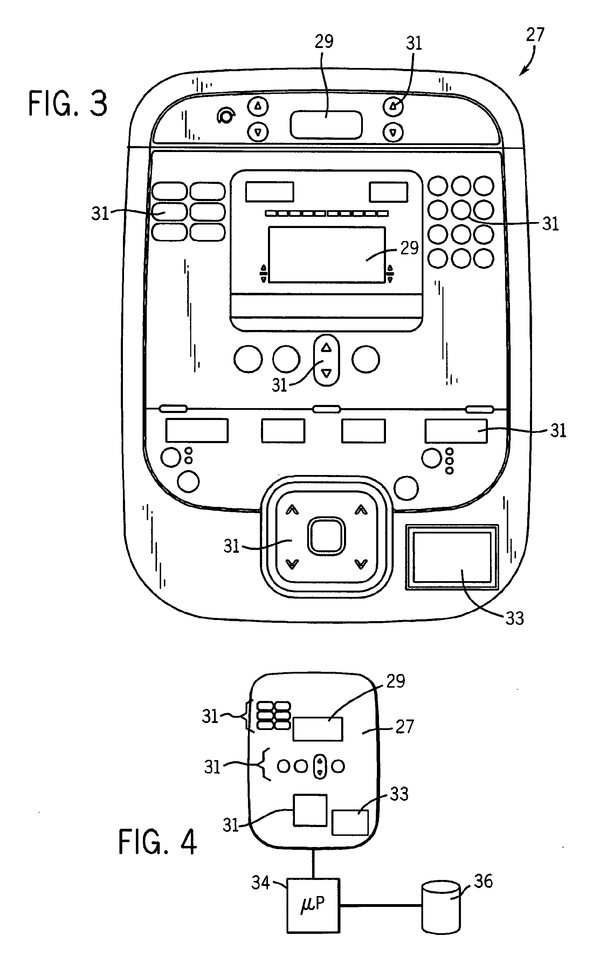

Preferably, a view screen 27 contained in electronic housing 28 is securely connected to the upper end of the forward upright member 20, at an orientation that can be easily viewable to a user of the fitness device 10. Referring to Figure 3, detail of an example view screen is seen. The view screen 27 conveys information both to and from the user. The view screen 27 includes at least one display 29 and various keyboard interfaces 31. In accordance with the principles of the present invention, a system is provided to provide biometric identification of a user of fitness equipment. Biometrics as used herein refers to the analysis of physiological or behavioral characteristics to identify or verify a user of the fitness equipment. Examples include fingerprint, hand geometry, face, voice, eye, etc. In accordance with one embodiment of the present invention, the biometric sensor 33 can be provided on the electronic housing 28.

Referring to Figure 4, a schematic of example electronics of the present invention is seen. The view screen 27 can include a microprocessor 34 that is connected to the display 29 and to the various keyboard interfaces 31. The microprocessor 34 is also connected to the biometric sensor 33, as described in detail below. The microprocessor is further connected to memory 36. In one embodiment, the view screen 27 can include a display console circuit board such as a T2 board; the microprocessor can be a microcontroller such as for example an Atmel mega1 28 processor with 16 MHz clock available from Atmel Corporation, 2325 Orchard Parkway, San Jose, California 95131 USA; the memory can be flash memory such as a flash Erasable Programmable Read-Only Memory (EPROM); Random Access memory (RAM); and Electrically Erasable Programmable Read-Only Memory (EEPROM).

The T2 board can include a connector for loading and reading flash and EEPROM memory. The connector can be for example a JTAG connector available from JTAG Technologies Inc., 1006 Butterworth Court, Stevensville, Maryland 21666 USA. Two serial ports can be provided: one for communications with the local processor; one for Communication Specification for Fitness Equipment (CSAFE) communications.

Electronic devices may be incorporated into the fitness device 10 such as timers, odometers, speedometers, heart rate indicators, energy expenditure recorders, controls, etc. A speed sensor can be preferably provided. In one embodiment, the speed sensor can be based on zero crossing of one phase of a SPAM generator, 51 pulses per revolution or 2 strides. A resistance can be provided by brake. A heart rate interface can supports a Polar heart rate receiver available from Polar Electro Inc., 1111 Marcus Avenue, Suite M15, Lake Success, New York 11042 USA.

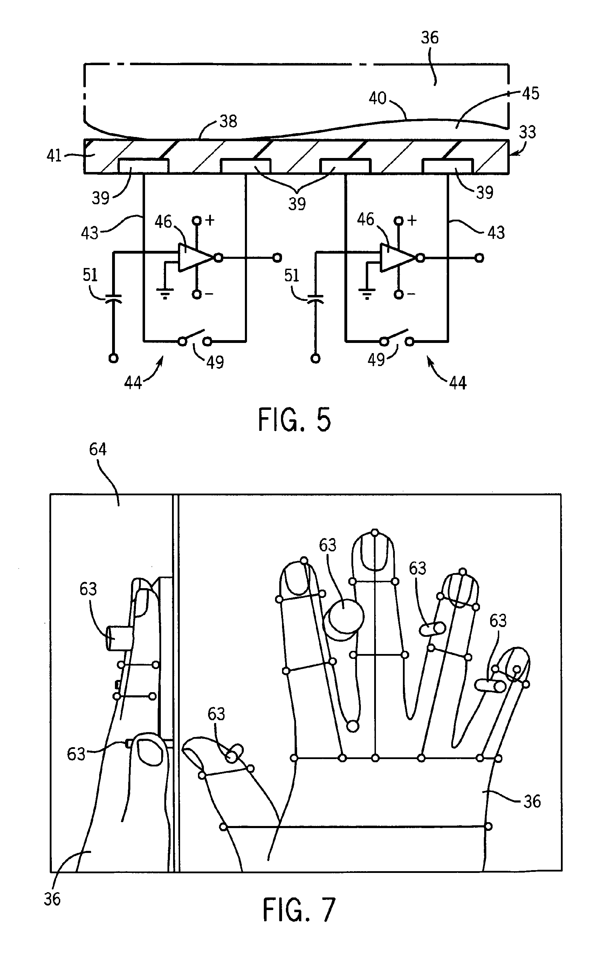

A biometric user identification system in accordance with the principles of the present invention comprises a capture mechanism, a processing mechanism, and a storage mechanism. In one embodiment of a biometric sensor in accordance with the present invention, the processing mechanism comprises the microprocessor 34 and the storage mechanism comprises the memory 36. In one embodiment of a biometric sensor in accordance with the present invention, the capture mechanism comprises the biometric sensor 33. In one embodiment of a biometric sensor in accordance with the present invention, the biometric sensor comprises a fingerprint biometric system. In a further embodiment of the present invention, a capacitive fingerprint scanner can be utilized. The capacitive fingerprint scanner generates an image of the ridges and valleys that make up a fingerprint by use of an electrical current. Referring to Figure 5, an electric circuit diagram showing an example capacitive fingerprint scanner is seen. A close-up of a finger 36 is seen. The finger 36 close-up shows a fingerprint ridge 38 and valley 40. The sensor 33 is comprised of one or more semiconductor chips containing an array of cells. Each cell includes two conductor plates 39, covered with an insulating layer 41, which comprises a capacitor. The cells can be smaller than the width of a ridge on a finger.

The sensor is connected to an integrator 44. The integrator comprises an inverting operational amplifier 46 as well as a number of transistors, resistors, and capacitors. The non-inverting terminal of operational amplifier 46 is connected to ground, and the inverting terminal is connected to a reference voltage supply and a feedback loop 43. The feedback loop 43, which is also connected to the operational amplifier 46 output, includes the two conductor plates 39.

The surface of the finger 36 acts as a third capacitor plate, separated by the insulating layers 41 in the cell structure and, in the case of the fingerprint valleys 40, a pocket of air 45. Varying the distance between the capacitor plates (by moving the finger 36 closer or farther away from the conductor plates 39) changes the total capacitance of the capacitor. Thus, the capacitor in a cell under a fingerprint ridge 38 will have a greater capacitance than the capacitor in a cell under a fingerprint valley 40.

To scan the finger, the microprocessor 34 first closes a reset switch 49 for each cell, which shorts the input and output of the operational amplifier 46 to "balance" the integrator 44. When the reset switch 49 is opened again, and the microprocessor applies a fixed charge to the integrator 44 and the various capacitors charge up. The capacitance of a capacitor 51 in the feed back loop affects the voltage at the input of the inverting operational amplifier 46, which affects the output of the inverting operational amplifier 46. Since the distance to the finger 36 alters capacitance, a finger ridge 38 will result in a different voltage output than a finger valley 40.

The microprocessor 34 reads this voltage output and determines whether it is characteristic of a fingerprint ridge 38 or valley 40. By reading the cells in the sensor array, the microprocessor can put together an overall image of the fingerprint. The fingerprint of the user can then be compared to an image of users' fingerprint previously registered in the memory 36 of the device.

In an alternative embodiment, a biometric fingerprint identification device in accordance with the principles of the present invention can utilize an optical scanner. The optical scanner is a charge coupled device comprising an array of light-sensitive diodes called photosites. The charge coupled device generates an electrical signal in response to light photons. Each photosite records a pixel representing the light that hit a particular spot. Collectively, the light and dark pixels form an image of the scanned finger. Typically, an analog-to-digital converter processes the analog electrical signal to generate a digital representation of the fingerprint image.

In one embodiment, a biometric identification system with the brand name FingerChip™ biometrics sensor available from Atmel Corporation, 2325 Orchard Parkway, San Jose, California 95131 USA can be utilized. The FingerChip™ biometrics sensor is a fingerprint sensor that uses thermal sensing technology that measures the temperature difference according to whether the finger skin touches the sensing area (for a fingerprint ridge) or not (for a fingerprint valley). The FingerChip™ biometrics sensor is made of a silicon die covered by a pyro-electric material, a material that is sensitive to temperature differences. The die itself is made of a matrix of adjacent pixels.

The temperature difference initially appearing at the pyro-electric layer contact is transformed into electrical charges due to the properties of the material. The electrical charges are then amplified and measured by the underlying silicon pixels, in order to create an accurate transcription of the fingerprint of a user.

Use of thermal technology operates well under drastic environmental conditions that can be found in the exercise environment, such as extreme temperatures, high humidity, and water (sweat) contamination. This thermal technology has a small dependence of distance between the finger and the sensor, allows complete encapsulation and protection of the sensor with a very robust coating, providing a very high resistance to shocks, abrasion, water or any other environmental stress.

The FingerChip™ biometrics sensor uses a sweeping procedure to acquire successive slices of the fingerprint, before reconstructing the complete fingerprint. This process reduces the required size of the silicon to manufacture a fingerprint sensor, which costs less and reduces latent prints naturally present on the surface of area sensors. Finally, the FingerChip™ biometrics sensor is self-cleaning since no latent print is left on the imaging surface.

Yet another example of such biometric fingerprint identification system is the EntréPad^{™} biometrics sensor available from AuthenTec, Inc., 709 South Harbor City Boulevard, Melbourne, Florida 32901 USA. The EntréPad^{™} is a fingerprint sensor that uses radio frequency (RF) signals to detect the fingerprint ridges and valleys. The fingerprint sensor includes a sensing area. The RF electronic imaging works by reading the fingerprint pattern from the live, highly-conductive layer of skin that lies just beneath the dry outer surface layer of the skin, when the user's finger is placed on or near to the sensing area of the sensor.

While these example biometric fingerprint sensors utilize capacitive sensing, optical imaging, thermal sensing and radio frequency sensing, the present invention is directed at all biometric sensors such as for example infrared gauging, and mechanical force measurement.

In some applications or in some locations, the user of a fingerprint biometric identification system may not be desired. Thus, in an alternative embodiment the capture mechanism comprises an alternative biometric such as for example hand geometry. A biometric identification system based upon the geometry of the human hand is generally not as detailed as fingerprint identification systems, and, in some applications or uses, may be desired over a fingerprint identification system.

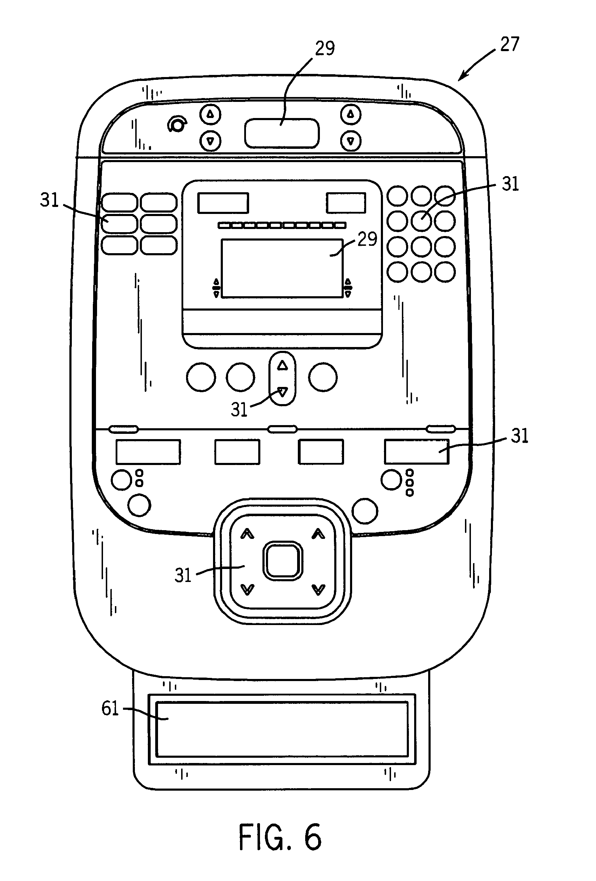

Referring to Figure 6, a view screen and electronic housing incorporating a hand geometry biometric identification system in accordance with the principles of the present invention is seen. A slot 61 can be provided in electronic housing into which the user places his or her hand. A hand geometry biometric identification system of the present invention measures finger length, thickness, and curvature for the purposes of verification of the user. The image acquisition system can comprise a light source, a camera, a mirror, and a flat surface. The user places his or her hand - palm facing downwards - on a flat surface of the device.

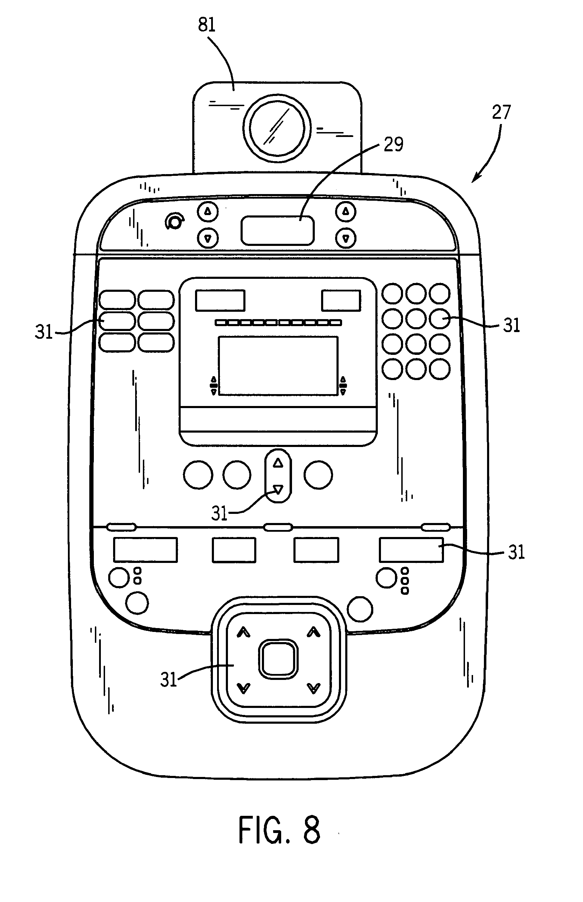

Referring to Figure 7, a schematic showing the hand measurements of a hand geometry biometric identification system of the present invention is seen. A placement mechanism such as four pegs 63 serves as control points for an appropriate placement of the hand 36 of the user. A mirror can project the side-view of the hand of the user onto the camera. The camera is connected to the microprocessor in the display 29. In one embodiment, the view screen 27 can include a graphical user interface (GUI) application which provides a live visual feedback of the top-view and the side-view of the hand. Feature extraction involves computing the widths and lengths of the fingers at various locations using the captured image. These metrics define the feature vector of the hand of the user. The hand of the user is compared to an image of users' hands previously registered in the memory of the device.

One drawback of the use of fingerprint and hand biometric identification systems is that both require physical contact with the user. Thus, in an alternative embodiment the capture mechanism comprises an alternative biometric such as for example a biometric face identification or recognition system. Referring to Figure 8, a view screen and electronic housing incorporating a face identification biometric system in accordance with the principles of the present invention is seen. A digital camera 81 is provided that captures a digital image of the user. The digital image of the user is compared to a digital image of users' faces previously registered in the memory of the device.

As previously noted, in addition to a capture mechanism a biometric user identification system in accordance with the principles of the present invention comprises a processing mechanism and a storage mechanism. In an initial step, in order to verify the identity of a fitness device user, a sample of the chosen biometric is captured. Data is then extracted by the fitness device microcontroller and stored as a template in the fitness device flash memory.

A biometric user identification system in accordance with the principles of the present invention further comprises an authentication process. During the authentication process, the user of the fitness equipment presents their biometric to the capture mechanism. Utilizing a matching algorithm contained within the fitness equipment microprocessor, the processing system compares the live biometric with the stored templates. If a match is made, the person is identified and granted access. In an alterative embodiment, the fitness equipment can be in communication with a central processor that contains the matching algorithm biometric templates for identification.

One example of the integration of a biometric user identification system into a control system for a fitness device is described below. The biometric user identification systems of the present invention are configurable for use in a wide variety of different fitness equipment operating or control systems. As previously noted, in the described embodiment the fitness equipment utilizes the Communication Specification for Fitness Equipment (CSAFE) communications. A Slave processor and a Master process can be provided. In an Offline state, the user starts a workout before equipment is configured; in the Ready state, the user completes the offline workout. In the transition from the Ready state to an Idle state, the Master processor sends configuration information and a GoIdle commend. From the Idle state, two active states are possible. In the Manual state, the user starts the equipment without identifying themselves using the biometric identification system. Upon completion of the workout the equipment returns to the Idle state.

In a HaveID state, the user enters their biometric or the Master processor sends a GoHaveID command. If the biometric is invalid, the Master processor sends the GoIdle commend and the equipment returns to the Idle state. If the Master processor validates the user's biometric, a GolnUse command is sent and the equipment enters an In Use / Paused state. When the user completes or aborts a workout or the Master processor sends a GoFinished command, the equipment enters a Finished state. The equipments also can implement a timeout condition if no response from the Master processor is received within an appropriate period of time. From the Finished state, the Master processor reads results and sends GoIdle command, and the equipment returns to the Idle state.

The Slave processor has several states. The Error state indicates a serious internal error of type that suggests unit not be used; that is, the unit has lost its calibration parameters. Slave processor should remain in this State until the problem has been fixed. The Ready or Initial state is entered when the Slave processor is turned on or is reset. The Slave processor remains in this state until either a manual workout begins causing a jump to OffLine State, or the Slave processor receives configuration commands from the Master processor and is promoted to Idle State. In the Idle State, the Slave processor has been configured by the Master processor and is now part of the Network environment. The Slave processor is waiting for a user to enter a biometric or a Start event (such as pressing a START key without entering a biometric). This is where a user chooses between a Manual workout that is not monitored by the Master processor or a Master processor sponsored workout after entering a valid biometric.

The HaveID state occurs when a user biometric or a Start event has been entered. The Master processor can request the biometric and decide based on what was entered whether to issue a command to go the InUse State or back to Idle State. In the InUse state, the workout program is running. If sufficient time elapses without activity or if the pause button is pressed, the Pause State is entered. Finishing the workout jumps to the Finished state. In the Pause state, the workout program is halted. If sufficient time passes without the user restarting the program and returning to the InUse state, the Finished state will be entered. In the Finished state, the workout program is completed. The Master processor solicits the results of the workout and then returns to the Idle State. In the Manual state, the user has elected a workout program that is not supervised by the Master processor. When she finishes the Slave processor will automatically return to the Idle state. In the OffLine state, the user has begun a workout program and the Master processor has not configured the Slave processor. On finishing, the Slave processor will return to the Ready state.

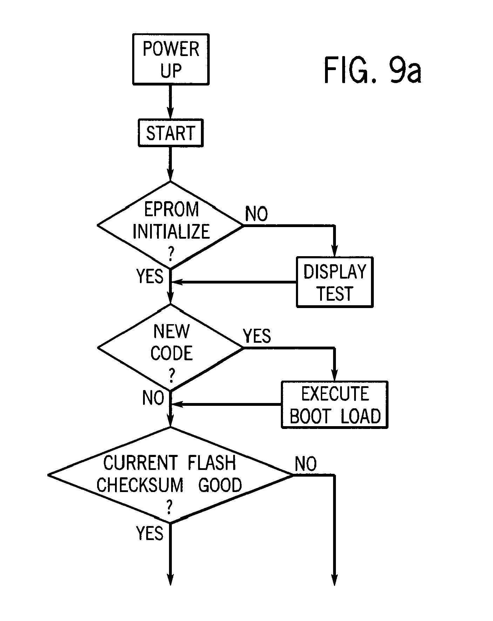

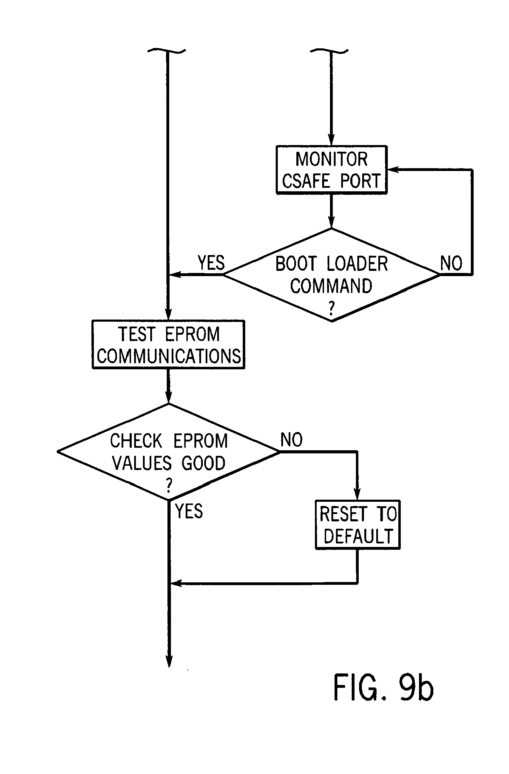

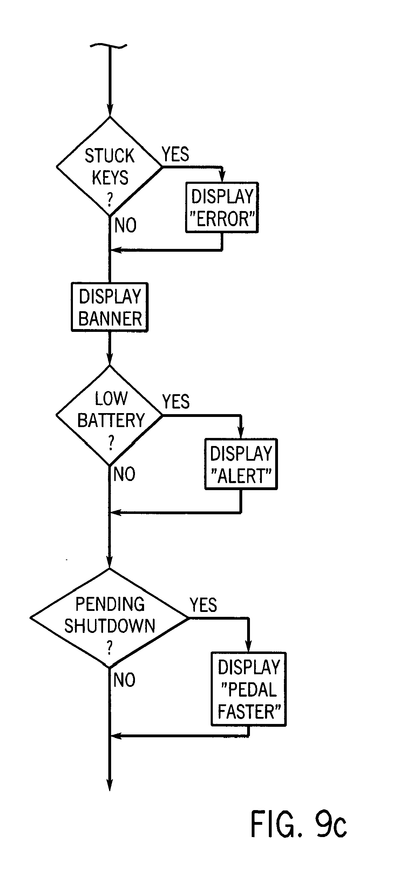

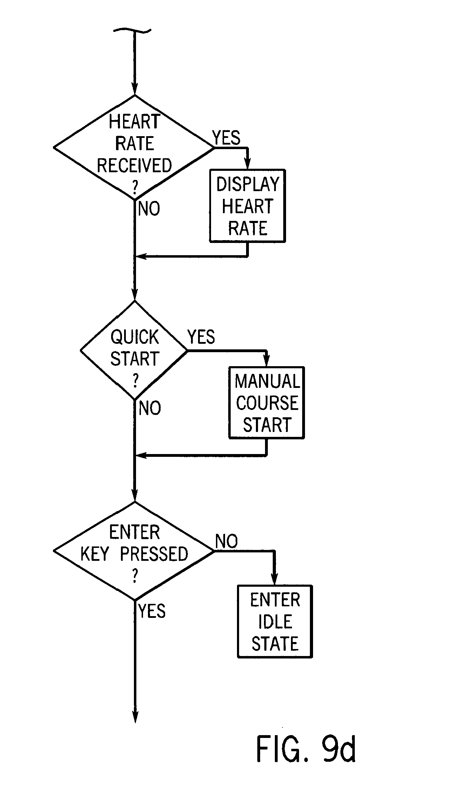

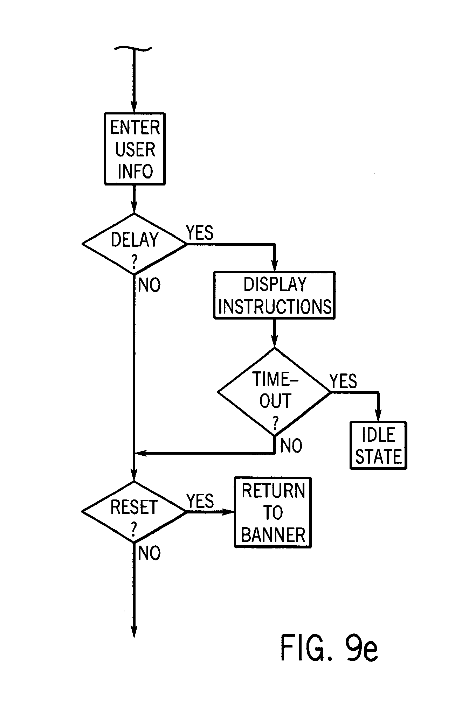

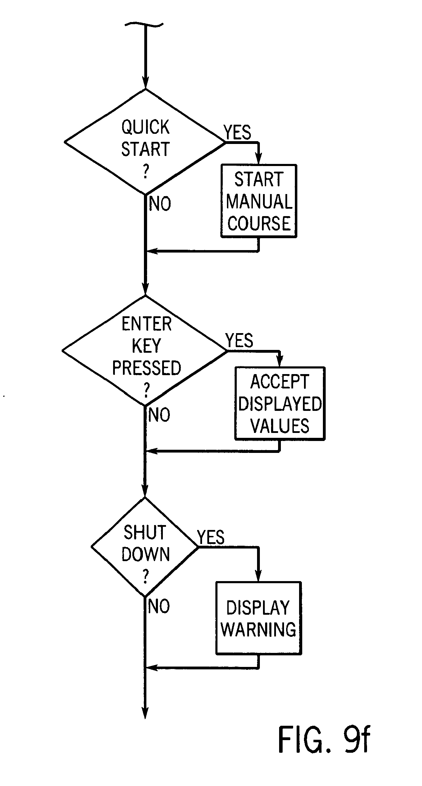

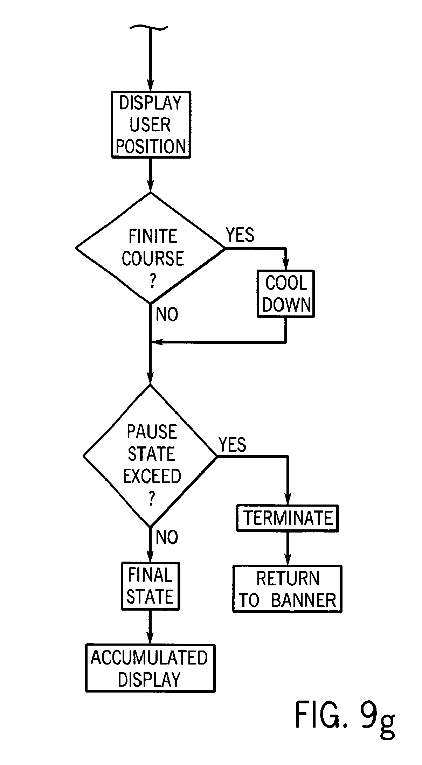

A local boot loader program is provided in the flash EPROM. A flow-chart showing one example of a local boot loader program is set forth in Figure 9. Initially during first power up, if the EEPROM indicates that it has not been initialized (check bytes not correct), or if the model number does not match that in the EEPROM, then a display test is done and the EEPROM is initialized.

In a normal power-up sequence, the program checks to see if any new code is available from the CSAFE serial port. The primary CSAFE port is monitored for boot loader commands. If the commands are received then the boot loader program is executed. If new code is available from the CSAFE serial port, the new code is downloaded. If boot loader commands are not received within a predetermined timeout period - for example 200 msec after power-up - and the current flash checksum is good, then the program that is currently in flash is executed. If the current flash checksum is incorrect then the boot loader program continuously monitors the primary CSAFE port for boot loader commands, with no other display activity. The EEPROM and upstairs-downstairs communications are then tested. Some EEPROM values are checked for validity. If a value is determined to be invalid then it is reset to its default value as listed above, with no messages displayed.

A test is then done for stuck keys; if a stuck key is detected then the power-up sequence is halted and an error is displayed until all keys are released. The power-up sequence then continues normally. Certain other parameters are initialized, and the machine then goes to banner.

When the machine is idle a banner is continually displayed. In an alternative embodiment, the machine owner is provided with the ability to put a custom banner in EEPROM, for example, a club name. In the absence of a custom banner in one embodiment, the LED matrix shows a default banner.

The alphanumeric display sequences through the following, which are centered on the display:
**PRESS QUICK START OR**
**ENTER FOR PROGRAMS**
If the low battery voltage alert flag is set then the following blinking message is appended to the banner text:
**WARNING LOW BATTERY**
During a pending shutdown the banner may be displayed. If the QUICK START or ENTER key is pressed, then the following message is displayed:
**PEDAL FASTER**
The hand-held heart rate grip events are ignored. If a valid heart rate is received then the heart rate value is displayed in the dedicated heart rate alphanumeric display. Otherwise this display is blank.

If the **QUICK START** key is pressed while the banner is being displayed then the manual course is started. The workout time is the club time limit as retrieved from EEPROM. The default weight of 150 pounds or 68 kg is used to compute calories. If the ENTER key is pressed while the banner is being displayed then user data entry is initiated. If the RESET key is pressed while the banner is being displayed then diagnostics are initiated. All other keys are ignored while the banner is being displayed.

If a "connected" state with a CSAFE Master processor device is achieved, before or during user data entry, then at some time during user data entry the user is prompted to:
**ENTER USER FINGERPRINT**
The user must then place their finger on the biometric fingerprint sensor pad. While the system verifies the user fingerprint, the following is displayed:
**SUBMITTING FINGERPRINT**
Based on the response from the CSAFE Master processor equipment, one of the following is briefly displayed:
**FINGERPRINT ACCEPTED**
**ERROR - TRY AGAIN**
If the response was "accepted" then the user is prompted to enter the next parameter. Otherwise the user is re-prompted to place their finger on the biometric fingerprint sensor pad. ID entry ends when one of the user data entry termination conditions occurs. The user is prompted to enter the next parameter.

If the user has identified himself or herself using the biometric system, the user's information such as weight, age, gender, etc. are accessed. Then, workout information such as course, workout time, etc. is entered. If the user has not identified himself or herself using the biometric system, user information can be manually entered.

Also in the data entry routines, if no key press is seen for 10 seconds after the prompt is first shown then the following messages are displayed briefly in sequence:
**USE NUMBER/ARROW KEYS**
**PRESS ENTER IF CORRECT**
If the parameter being selected has been changed, and after which there is a period of for example 10 seconds with no more key presses, then just one message is displayed:
**PRESS ENTER IF CORRECT**
These messages are interrupted by pressing any key.

There are several ways to terminate user data entry:
- Timeout: If no key presses are seen for two minutes then the user data entry process is aborted and the banner returns.
- **RESET:** If the **RESET** key is pressed then the user data entry process is aborted and the banner returns.
- **QUICK START:** If the **QUICK START** key is pressed then further data entry is bypassed; default values are used. The displayed or selected course is started (see "Starting" below). Some additional messages and/or data entry prompts also may be displayed, depending on the type of course selected.
- **ENTER:** Normally, if the **ENTER** key is pressed then the displayed value is accepted. If there is more data to enter then the user is prompted for that data. If there is no more data to enter then the selected course is started (see "Starting" below). Some additional messages and/or data entry prompts also may be displayed, depending on the type of course selected.
- If the pending shutdown state is entered during data entry then data entry is suspended. The matrix and heart rate LEDs are blanked and
   **PEDAL FASTER**
   is displayed on the alphanumeric LEDs. All key presses and hand-held heart rate grip events are ignored. If the pending shutdown is removed (i.e. the user starts pedaling again or the charger is connected) then data entry resumes.

Next, the course is selected. If the **ENTER** key is pressed while the banner is being displayed then the manual course profile (a flat line) is displayed and the alphanumeric display shows:
**1 MANUAL COURSE**
Examples of available courses and the corresponding names, displayed on the alphanumeric LEDs, are:
**1 MANUAL COURSE**
**2 CROSS TRAINING**
**3 CROSS COUNTRY**
**4 HILL CLIMB**
**5 GLUTEAL**
**6 INTERVAL COURSE**
**7 WEIGHT LOSS COURSE**
**8 FITNESS TEST**
ARROW keys may be used to change the course. The **UP ARROW** key scrolls downward through the above list, and the **DOWN ARROW** key scrolls upward through the list. Numeric keys 1 through 8 also may be used; the displayed course corresponds to the key pressed. Numeric keys 0 and 9 are ignored. When a course is displayed, the corresponding profile also is displayed on the matrix LEDs.

Course selection ends when one of the user data entry termination conditions occurs, or when the **ENTER** key is pressed. If the **ENTER** key is pressed then selection of the next parameter is started. Pressing the **QUICK START** key selects the displayed course. The course is started; the workout time is the club time limit as retrieved from EEPROM. No messages indicating percent completion are displayed (except in the Weight Loss course), since a workout time was not entered. If the user has not identified themselves using the biometric system, the default weight of 150 pounds or 68 kg is used to compute calories.

A workout time may be entered if the course is not the Weight Loss course. The duration of the Weight Loss course is fixed at 28 minutes. When workout time entry is started, the following prompt is displayed with a default time of 30 minutes or the club time limit, whichever is less:
**ENTER TIME 30 MIN**
The number blinks until any key is pressed. When **ARROW** keys are pressed the displayed value increments or decrements between 1 and 240, with no wrapping. If the displayed value is at the club time limit then pressing an **UP ARROW** key does not change the value. If the displayed value is at the minimum allowable time then pressing a **DOWN ARROW** key does not change the value.

Workout time entry ends when one of the user data entry termination conditions occurs (see above), or when the **ENTER** key is pressed. The selected time may vary from 1 minute to the club time limit, which may be as large as 240 minutes, or "no limit". If the **ENTER** key is pressed and the displayed value is within this range then selection of the next parameter is started.

If the **QUICK START** key is pressed and the displayed value is within the acceptable range then the previously selected course is started, with the displayed workout time. If the user has not identified themselves using the biometric system, the default weight of 150 pounds is used to compute calories. If the club time limit is "no limit" then when the **ENTER** or **QUICK START** key is pressed any displayed value from the minimum allowable time up to 240, as well as zero, is accepted. If the displayed value is not zero then the course is run in mode 1 or 2 for that number of minutes. If the displayed value is zero then the course is run in mode 3. The zero can be entered with the numeric keys. If the **ENTER** or **QUICK START** key is pressed and the displayed value is not within the acceptable range then an appropriate error message is displayed and the user is re-prompted to enter workout time, with the displayed value unchanged and blinking.

If the user has not identified themselves using the biometric system, the weight of the user is entered. When weight entry is started, the following prompt is displayed with a default weight of 150 pounds or 68 kilograms:
**ENTER WEIGHT 150 LB**
**ENTER WEIGHT 68 KG**
The number blinks until any key is pressed. When ARROW keys are pressed the displayed value increments or decrements between 1 and 999, with no wrapping. When numeric keys are pressed the corresponding digits are shifted in right to left, with the last three digits displayed. For example, if 1 then 2 then 3 then 4 are pressed, then the following is displayed:
**ENTER WEIGHT 1 LB**
**ENTER WEIGHT 12 LB**
**ENTER WEIGHT 123 LB**
**ENTER WEIGHT 234 LB**

Weight entry ends when one of the user data entry termination conditions occurs (see above), or when the ENTER key is pressed. No limit checking is done. If the **ENTER** key is pressed then, if a heart rate receiver is installed, selection of the next parameter is started. If a heart rate receiver is not installed then the **ENTER** key is treated the same as the **QUICK START** key (see below). If the **QUICK START** key is pressed then the previously selected course is started, with the previously selected workout time. The displayed weight is used to compute calories.

If the user has not identified themselves using the biometric system, the age of the user is entered. When age entry is started, the following prompt is displayed with a default age of 0, which indicates that the age is unknown:
**ENTER AGE 0 YEARS**
The number blinks until any key is pressed. The first time an up arrow key is pressed, the displayed age becomes 35. Subsequent arrow key presses cause the displayed value to increment or decrement between 1 and 99, with no wrapping. When numeric keys are pressed the corresponding digits are shifted in right to left, with the last two digits displayed. For example, if 1 then 2 then 3 are pressed, then the following is displayed:
**ENTER AGE 1 YEARS**
**ENTER AGE 12 YEARS**
**ENTER AGE 23 YEARS**
Age entry ends when one of the user data entry termination conditions occurs or when the ENTER or QUICK START key is pressed. No limit checking is done. The previously selected course is started, with the previously selected workout time. The previously selected weight is used to compute calories.

If the Fitness Test has been selected and the user has not identified themselves using the biometric system, the user is prompted for gender. When gender entry is started, the following prompt is displayed with the default gender of MALE.
**ENTER GENDER MALE**
The gender blinks until any key is pressed. The first time an up arrow key is pressed, the displayed gender becomes FEMALE. Subsequent arrow key presses cause the displayed value to toggle between MALE and FEMALE gender entry ends when one of the user data entry termination conditions occurs or when the ENTER or QUICK START key is pressed. The Fitness test is started.

On entry into the Final state, the message
**WORKOUT SUMMARY**
is displayed, followed by heart rate analysis information, if any. Resistance is reduced to the minimum at a controlled rate. The lift is stopped by setting the target incline equal to the current incline.

In the Final state, the accumulated parameter displays (time, distance, calories, etc.) show totals accumulated during the course plus any cool-down and warm-up periods. The accumulated parameters do not change. The current incline is displayed in the incline field. Other workout parameters are set to zero. The CHANGE keys operate normally; all other keys besides the **RESET** key are ignored. The Final state times out in two minutes causing a return to the banner. In the Paused or Final state, if a normally ignored key is pressed then the appropriate message is briefly redisplayed.

After the workout summary message is (re)displayed, one or more of the following also may be displayed:
**xxx AVERAGE HEART RATE**
**xxx MAXIMUM HEART RATE**
**xx:xx IN ZONE xxx-xxx**
The first two messages show the average and maximum heart rate of the user during a course. These messages are displayed if heart rate data was acquired during a course, that is, a valid heart rate number was displayed at least once during the course.

While the invention has been described with specific embodiments, other alternatives, modifications and variations will be apparent to those skilled in the art.
As previously described, while the example embodiment depicts a total body elliptical fitness cross-training device, the principles of the present invention apply to any other fitness devices, including but not limited to treadmills, stair climbers, stationary bikes, rowing machines, stair climbers, weight resistance machines and the like. In addition, while the preferred biometrics described herein is fingerprinting, hand geometry and/or face recognition biometrics, additional biometrics such as, for example, voice, eye, etc can be utilized. Accordingly, it will be intended to include all such alternatives, modifications and variations set forth within the spirit and scope of the appended claims.

## Claims

**1.** An operating system architecture for a fitness trainer comprising:
a display;
a processor in communication with the display;
a hardware circuit board in communication with the processor;
memory in communication with the hardware circuit board and the processor; and
a biometric capture mechanism in communication with the processor and the memory, the memory being capable of storing template biometric data with which biometric data captured by the biometric capture mechanism is compared.

**2.** The operating system architecture for a fitness trainer of claim 1 wherein the biometric capture mechanism is a fingerprint biometric system.

**3.** The operating system architecture for a fitness trainer of claim 1 wherein the biometric capture mechanism is a hand geometry biometric system.

**4.** The operating system architecture for a fitness trainer of claim 1 wherein the biometric capture mechanism is a face identification biometric system.

**5.** The operating system architecture for a fitness trainer of claim 2, wherein the fingerprint biometric system is a capacitive fingerprint identification system.

**6.** The operating system architecture for a fitness trainer of claim 5, wherein the capacitive fingerprint identification system includes a sensor comprised of at least one semiconductor chip.

**7.** The operating system architecture for a fitness trainer of claim 6, wherein the semiconductor chip comprises an array of cells, and wherein each cell includes at least two conductor plates and an insulating layer.

**8.** The operating system architecture for a fitness trainer of claim 6, wherein the sensor is coupled to an integrator.

**9.** The operating system architecture for a fitness trainer of claim 2, wherein the fingerprint biometric system comprises an optical scanner.

**10.** The operating system architecture for a fitness trainer of claim 9, wherein the optical scanner includes an array of light-sensitive diodes.

**11.** The operating system architecture for a fitness trainer of claim 10, wherein each light-sensitive diode records a pixel representing the amount of light hitting a particular location of the light-sensitive diode.

**12.** The operating system architecture for a fitness trainer of claim 2, wherein the fingerprint biometric system includes a thermal sensor having a sensing area, and wherein the thermal sensor is capable of measuring the temperature difference a first location upon which a ridge of a user's fingerprint contacts the thermal sensor and a second location wherein the user's fingerprint does not contact the thermal sensor.

**13.** The operating system architecture for a fitness trainer of claim 12, wherein the thermal sensor comprises a die including a plurality of pixels, and wherein the die is covered by a pyro-electric material.

**14.** The operating system architecture for a fitness trainer of claim 2, wherein the fingerprint biometric system includes a radio frequency sensor and a sensing area, and wherein the radio frequency sensor is capable of detecting the ridges and valleys of a user's fingerprint when the user's finger is applied having a sensing area.

**15.** The operating system architecture for a fitness trainer of claim 3, wherein the hand geometry biometric system a hand placement mechanism and an image acquisition system, and wherein the hand placement mechanism facilitates the alignment of a user's hand relative for image capture by the image acquisition system.

**16.** A fitness device comprising:
a frame having a pivot axis defined thereon, the frame configured to be supported on a floor;
first and second foot links, each foot link including a first portion and a second portion;
first and second foot supporting portions for receiving the feet of the user, the first and second foot support portions supported by the first and second foot links, respectively;
a coupling associated with the first portion of each foot link for coupling the first portion of each foot link to the pivot axis so that the first portion of each foot link travels in a closed path relative to the pivot axis;
a guide associated with the frame and operative to engage and direct the second portions of the foot links along preselected reciprocating paths of travel as the first portions of the respective foot links travel along their paths of travel, so that when the exercise device is in use the foot support portion moves along a generally elliptical path of travel;
a display in communication with the foot link;
a processor in communication with the display;
memory in communication with the processor; and
a biometric capture mechanism in communication with the processor and the memory.

**17.** The operating system architecture for a fitness trainer of claim 16 wherein the biometric capture mechanism is a fingerprint biometric system.

**18.** The operating system architecture for a fitness trainer of claim 16 wherein the biometric capture mechanism is a hand geometry biometric system.

**18.** The operating system architecture for a fitness trainer of claim 16 wherein the biometric capture mechanism is a face identification biometric system.

**19.** The operating system architecture for a fitness trainer of claim 17, wherein the fingerprint biometric system is a capacitive fingerprint identification system.

**20.** The operating system architecture for a fitness trainer of claim 17, wherein the fingerprint biometric system comprises an optical scanner.

**21.** The operating system architecture for a fitness trainer of claim 17, wherein the fingerprint biometric system includes a thermal sensor having a sensing area, and wherein the thermal sensor is capable of measuring the temperature difference a first location upon which a ridge of a user's fingerprint contacts the thermal sensor and a second location wherein the user's fingerprint does not contact the thermal sensor.

**22.** The operating system architecture for a fitness trainer of claim 17, wherein the fingerprint biometric system includes a radio frequency sensor and a sensing area, and wherein the radio frequency sensor is capable of detecting the ridges and valleys of a user's fingerprint when the user's finger is applied having a sensing area.

**23.** A system of identifying a user for a fitness trainer comprising:
capturing a user biometric;
extracting data from the biometric and storing the data as a template;
capturing a sample of the chosen biometric;
the user of the fitness equipment presenting a live biometric; and
utilizing a matching algorithm, comparing the live biometric with the stored templates;
whereby, if a match is made, the user is granted access to operate the fitness trainer.

**24.** The system of identifying a user for a fitness trainer of claim 23 wherein the step of capturing a user biometric comprises capturing a user fingerprint.

**25.** The system of identifying a user for a fitness trainer of claim 24 wherein the step of capturing a user fingerprint biometric comprises measuring a fingerprint with a finger capacitance sensing system.

**26.** The system of identifying a user for a fitness trainer of claim 24 wherein the step of capturing a user fingerprint biometric comprises measuring a fingerprint with a finger biometric thermal sensing system.

**27.** The system of identifying a user for a fitness trainer of claim 24 wherein the step of capturing a user fingerprint biometric comprises measuring a fingerprint with a radio frequency (RF) sensing system.

**28.** The system of identifying a user for a fitness trainer of claim 23 wherein the step of capturing a user biometric comprises capturing a user hand biometric.

**29.** The system of identifying a user for a fitness trainer of claim 23 wherein the step of capturing a user biometric comprises capturing a user face biometric.
